# EUROPEAN PATENT SPECIFICATION

(11) **EP 0 693 395 B1**
(45) Date of publication and mention of the grant of the patent: **12.05.1999**
(21) Application number: 95305069.7
(22) Date of filing: 20.07.1995
(51) Int. Cl.: B60P 1/16, E02F 9/12, E02F 9/22

(54) **A dumper vehicle**
Kipperfahrzeug
Véhicule à benne

(30) Priority: 21.07.1994 GB 9414694
(43) Date of publication of application: 24.01.1996
(73) Proprietor: THWAITES LIMITED, Warwickshire CV32 7NQ (GB)
(72) Inventor: Williams, Peter, Leamington Spa, Warwickshire CV32 6LN (GB)
(74) Representative: Barnfather, Karl Jon, Dr.

(56) References cited:
- BE-A- 534 537
- DE-A- 3 508 691
- GB-A- 847 238
- GB-A- 950 834

## Description

The invention relates to a fluid circuit for a dumper vehicle having the features as set forth in the preamble of claim 1 (see, for example, GB-A-847 238.)

The invention also relates to a dumper vehicle and is particularly concerned with a dumper comprising a chassis on which there is mounted a load-carrying skip and two fluid-operable rams for slewing the skip, eg in a substantially horizontal plane, as set forth in the preamble of claim 2 (see, for example, the a.m. GB-A-847 238.)

For some time, Thwaites Ltd has been manufacturing and selling dumpers of the foregoing kind which have proved to be extremely successful in use. The two fluid-operable rams for rotating the skip comprise two cylinders which are mounted at one end on the chassis and have piston rods extending from their other ends. The piston rods are pivotally connected to a turntable at positions one each side of the rotational axis of the turntable and in front of the axis with the skip in its central straight-ahead position. In order to slew the skip, fluid from a fluid circuit is fed under pressure to the rams so as to extend one ram and retract the other. Rotation of the turntable in the opposite direction can be effected by reversing the operation of the rams. Such a ram arrangement for slewing the skip provides a very positive action with minimum backlash and has proved to be extremely effective.

Dumpers are typically used on very uneven terrain which can cause a dumper to be tilted sideways on an incline at a steep angle when carrying heavy loads in the skip. Such sideways tilting creates a large rotational force which would, if a heavily loaded skip were freely rotatable, cause the skip to turn until it pointed fully down the incline. The action of the rams is designed to inhibit such movement. However, the rams can be put under particularly severe loads if the loaded skip is, say, deliberately rotated in the direction it would naturally want to turn when the dumper is tilted on an incline and then suddenly stopped using a control valve in the fluid circuit before the skip points fully down the incline.

GB-A-847238 discloses a system whereby hydraulic rams are operable to move a chain and thereby drive a slewing pulley. The fluid circuit to the rams is provided with a relief valve to prevent damage to rams in the event of external loading to the bucket or the like.

BE-A-534 537 discloses a system similar to the above-mentioned one, in which the relief valve comprises first and second pressure release means connected directly to the hydraulic rams respectively.

An object of the present invention is to provide an improved dumper which will enable the rams to cope with than type of loading situation particularly well.

According to the invention there is provided a fluid circuit for a dumper, the circuit including two fluid operable rams, a fluid communication line to each ram and valve means for permitting fluid under pressure in one part of the said fluid circuit to escape to another part of the circuit in the event of the fluid in a communication line leading to one of the rams exceeding a given pressure due to that ram being subjected to a sudden increase in load, characterised in that the valve means comprise first and second pressure release means provided between the fluid communication lines to each ram.

The invention further provides a dumper comprising a chassis on which there is mounted a load-carrying skip and two fluid operable rams for slewing the skip, the rams being arranged in a fluid circuit which delivers fluid under pressure to the rams, the fluid circuit including fluid communication means (lines) to each ram and valve means for permitting fluid under pressure in one part of the said fluid circuit to escape to another part of the circuit in the event of the fluid in a communication means leading to one of the rams exceeding a given pressure due to that ram being subjected to a sudden increase in load, characterised in that the rams are pivotally connected between the chassis and the skip, and the valve means comprise pressure release means provided between the fluid communication means to each ram.

If, during slewing movement, the skip is suddenly stopped as described above, any resulting increase in pressure can be relieved via the valve means. In that way, the ram can withstand more effectively the load which results when that ram is used to stop deliberate downward slewing of the skip when the dumper is tilted on an incline.

Preferably, fluid in the circuit is fed to both of the rams simultaneously so as to apply high pressure to one end of one ram and high pressure to the opposite end of the other ram, fluid at low pressure simultaneously leaving the other ends of the rams. Preferably a loaded skip is brought to a halt by preventing flow of fluid from the rams (which results in an increase in pressure in a line through which the fluid would normally flow) and relieving the high pressure formerly applied to slew the skip. The valve means in such a case may then operate to permit fluid to flow from the line subjected to the increase in pressure.

Accordingly, the fluid circuit is preferably arranged to feed fluid to both of the rams simultaneously so as to enable the application of high pressure to one end of one ram and to the opposite end of the other ram. Also, the fluid circuit can be arranged to drain fluid from both rams simultaneously so as to enable the drainage of low pressure fluid from one end of one ram and the opposite end of the other ram.

Preferably the rams each comprise one end and an opposite end and the fluid circuit comprises a first means for communicating fluid to the one end of a first ram and the opposite end of a second ram, and a second means for communicating fluid to the one end
of the second ram and the opposite end of the first ram. The valve means comprise a first pressure release means for allowing communication of fluid from the first to the second fluid communication means in order to relieve fluid pressure above a predetermined level. Also, the valve means comprises a second pressure release means for allowing communication of fluid from the second to the first fluid communication means in order to relieve pressure above a predetermined level. Preferably, the fluid communication in the opposite direction through each of the pressure release means in inhibited respectively by said first or second pressure release means.

Another aspect of the invention provides a method of halting the slewing of a dumper according to claim 9 and comprising the steps of applying an increase in fluid pressure to selected opposite ends of the rams so as to prevent fluid release therefrom and to counter the direction of movement of the skip;
allowing release of excess fluid pressure above a predetermined level in the fluid circuit; and
allowing fluid communication from a first fluid communication means connecting opposite ends of the two rams along a first release means to a second fluid communication means or allowing fluid communication from the second fluid communication means connecting different opposite ends of the two rams along a second release means to the first fluid communication means.

A dumper in accordance with the invention will now be described by way of example with reference to the accompanying drawings in which
Fig 1 is an elevation of a dumper in accordance with the invention:
Fig 2 is a plan view of a front chassis section of the dumper of Fig 2 showing a turntable and an arrangement of rams for rotating the turntable,
Fig 3 is a cross section through the turntable shown in Fig 2 on the line III III in Fig 2,
Fig 4 illustrates a fluid circuit for rotating the turntable and for operating various other rams on the dumper and
Figs 5a to 5e are diagrammatic views showing the way in which the rams are operated to rotate the turntable and hence slew the skip.

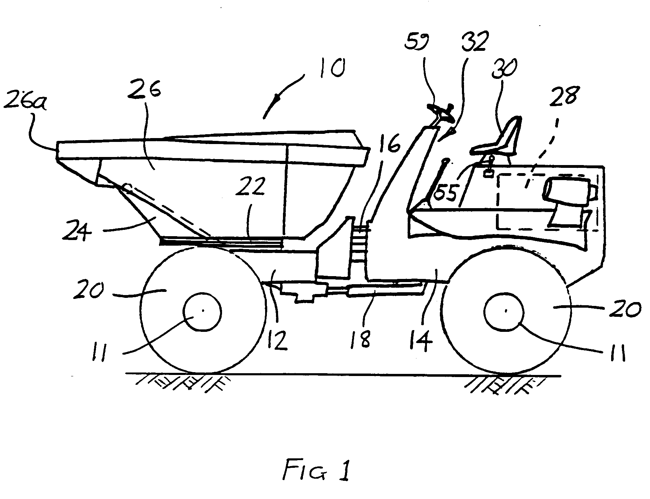

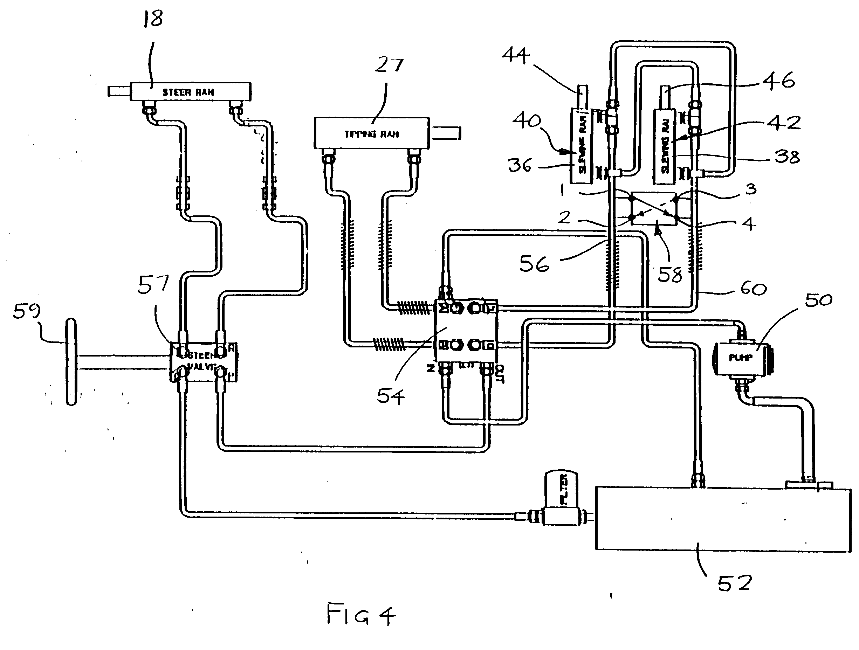

Referring to Fig 1, a dumper 10 comprises front and rear chassis sections 12, 14 interconnected by a centre pivot 16 which will allow relative movement between the chassis sections for steering and also permit relative rolling movement therebetween. The chassis sections 12, 14 can be slewed by means of a steering ram 18. The front and rear chassis sections 12, 14 are supported by respective axles 11 having wheels 20 thereon. The front chassis section 12 has a turntable 22 thereon, the turntable 22 having a pair of upwardly extending arms 24 which pivotally support a load carrying skip 26. The skip 26 can be raised for tipping and lowered by pivoting the skip forwardly on the arms 24 by means of a tipping ram 27 (see Fig 4). The rear chassis section 14 carries an engine 28 and the normal seat 30 and controls 32 for a driver.

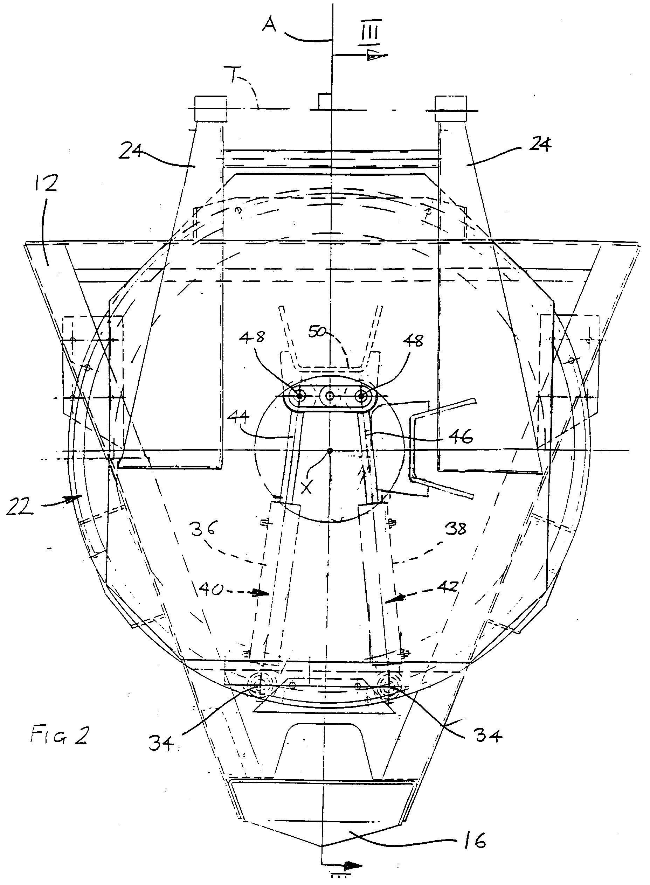

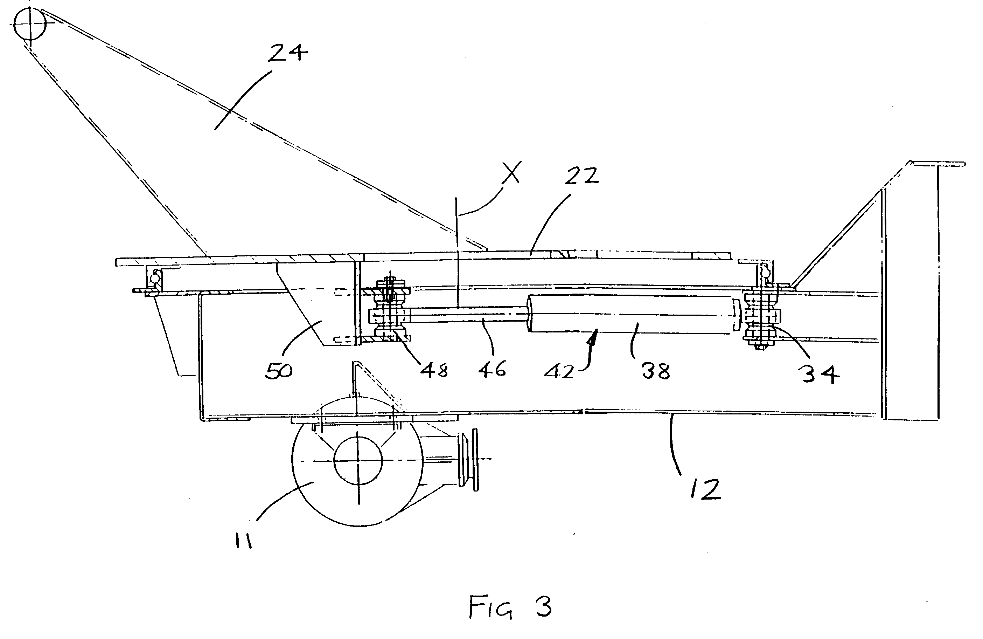

Referring now to Figs 2 and 3, the front chassis section 12 has two mounting bearings 34 which pivotally support respective cylinders 36, 38 of first and second rams 40, 42 respectively. The rams, 40, 42 have respective piston rods 44, 46 extending therefrom and pivotally connected to bearings 48 on a bracket 50 connected to the underside of the turntable 22. The turntable 22 has an axis of pivoting X and, with the rams 40, 42 in the position shown in Fig 2 (corresponding to the straight ahead central position of the skip as shown in Fig 1), the bearings 48 lie evenly one each side and forwardly of the axis X.

Referring to Fig 4, a hydraulic circuit for controlling the rams 18, 27, 40 and 42 is illustrated.

A pump 50 draws hydraulic fluid from a tank 52 and pumps the fluid to a main control valve 54 which is controlled by means of a suitable lever 55 (see Fig 1) operated by the driver. Operation of the control valve 54 will cause fluid to be pumped either to the tipping ram 27 to raise and lower the skip 26 or to the rams 40,42 to effect slewing of the skip 26. Fluid can be fed to the steering ram 18 via a valve 57 operated by a steering wheel 59.

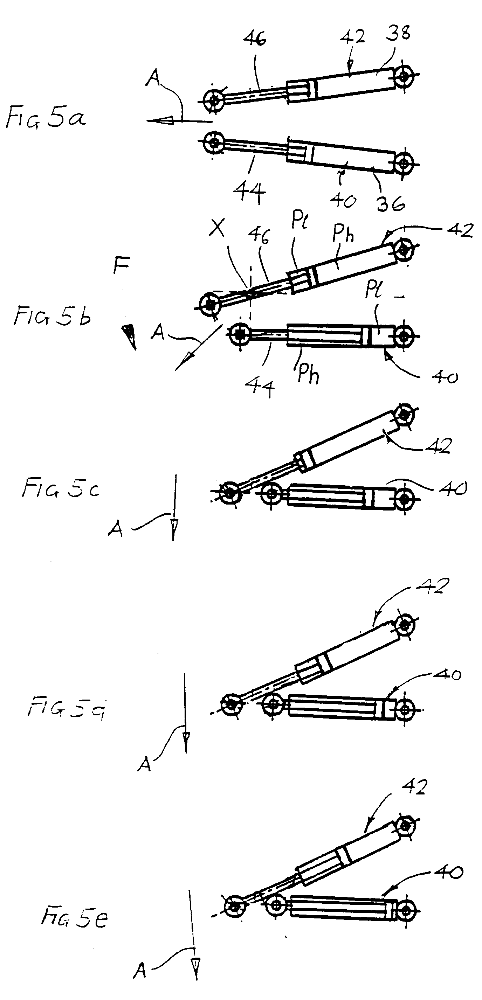

By feeding fluid under high pressure Ph (Fig 5b) through a line 56 it will be noted from Fig 4 that the fluid will be fed to one end of the steering ram 40 and to the opposite end of the steering ram 42. Therefore, the piston rod 44 of ram 40 will begin to retract into the cylinder 36 and the piston rod 46 of the ram 42 will begin to extend from the cylinder 38. Fluid under low pressure (Pl) will leave the cylinders 40, 42 through a line 60 and flow towards the tank 52 via the control valve 54. Various stages of the retraction and extension of the piston rods 44, 46 are shown in Figs 5a to 5e. Arrow A in Figs 5a -5e indicates the position of axis A in Fig 2 which is always at right angles to an axis of tipping T for the skip 26 defined by the arms 24. Therefore, from those figures, it can be seen that the contraction/extension of the rams 40, 42 causes the turntable 22 to slew the skip 26. Once the Fig 5c position is reached, the fluid feed to the rams 40, 42 is reversed so that the piston rods 40, 44 are moved in opposite directions to those shown in Figs 5a to 5c if it is desired to rotate the skip further into the Figs 5d and 5e positions.

To slew the skip 26 in the opposite direction, the sequence of fluid feed to the rams 40, 42 is reversed.

In accordance with the present invention, a relief valve 58 is positioned between the two lines 56, 60. A suitable relief valve is obtainable from Oil Control UK Ltd of Coventry under reference no.05.16.03-03-02-35. The relief valve 58 has two ports 1, 2 connected to the line 56 and two ports 3, 4 connected to the line 60.

Assuming that the dumper 10 is tilted on an incline with the rams 40, 42 in the Fig 5b position and assuming that the loaded skip 26 would naturally want to rotate in the direction of Arrow F, the rams 40, 42 will resist the natural tendency of the skip to rotate. If, with fluid pressures Ph and Pl as shown in Fig 5b, the ram 42 is extended and the ram 40 contracted so as deliberately to slew the skip 26 about its axis X in direction F, the driver can operate the control valve 54 to bring the skip suddenly to a stop by connecting line 60 to high pressure Ph and connecting line 56 to low pressure Pl. The braking of the skip 26 in that way brings about a suddenly applied force which tries to contract the piston rod 44 and extend the piston rod 46 against the high pressure fluid in line 60 thereby tending to increase the pressure in that line. However, in accordance with the invention as defined in the claims, the valve 58 relieves the pressure in the line 60 by allowing fluid in line 60 to pass through port 3 and through to port 2 thereby connecting the fluid at high pressure in line 60 to the fluid at low pressure Pl in line 56. The valve 58 is set to allow fluid to flow from port 3 to port 2 when the pressure in line 60 exceeds a given pressure. The pressure relief provided by the valve 58 provides a cushioning effect which relieves the load suddenly applied to the rams and enables the rams to withstand particularly well the effect of bringing the moving skip 26 to a sudden halt.

When the high pressure feed to the rams 40, 42 is reversed so that fluid at high pressure Ph is fed to the cylinders through line 60 and fluid at low pressure Pl escapes through line 56 the valve 58 operates in a reverse manner to connect the line 56 to line 60 via ports 1 and 4 to relieve excess pressure when the fluid in line 56 is switched to high pressure to brake the skip 26 and the line 60 is connected to low pressure.

Fluid is unable to flow from port 4 to port 1 and from port 2 to port 3 due to a one way flow valve arrangement within the valve 58.

It has been found on test that, surprisingly, the operation of the valve 58 does not result in any perceptible over running of the skip 26 from the position at which the driver requires the skip to be positioned when it is brought to a stop. In that respect, the invention does not affect the accuracy of positioning of the skip by the driver.

## Claims

1. A fluid circuit for a dumper, the circuit including two fluid operable rams (40,42), a fluid communication line (56,60) to each ram and valve means (58) for permitting fluid under pressure in one part of the said fluid circuit to escape to another part of the circuit in the event of the fluid in a communication line (56, 60) leading to one of the rams (40,42) exceeding a given pressure due to that ram (40,42) being subjected to a sudden increase in load, characterised in that the valve means (58) comprise first and second pressure release means provided between the fluid communication lines (56,60) to each ram (40,42), said first pressure release means allowing communication of fluid from a first to a second of said fluid communication lines (56,60), said second pressure release means allowing communication of fluid from the second to the first fluid communication line (60,56), and fluid communication in the opposite direction through each pressure release means is inhibited.

2. A dumper (10) comprising a chassis (12, 14) on which there is mounted a load-carrying skip (26) and two fluid operable rams (40, 42) for slewing the skip (26), the rams (40, 42) heing arranged in a fluid circuit (56, 60) which delivers fluid under pressure to the rams (40, 42), the fluid circuit including fluid communication means (56, 60) to each ram (40, 42), and valve means (58) for permitting fluid under pressure in one part of the said fluid circuit to escape to another part of the circuit in the event of the fluid in a communication means (56, 60) leading to one of the rams (40, 42) exceeding a given pressure due to that ram (40, 42) being subjected to a sudden increase in load, characterised in that the rams (40, 42) are pivotally connected between the chassis (12, 14) and the skip (26), and the valve means (58) comprise pressure release means provided between the fluid communication means (56, 60) to each ram (40, 42).

3. A dumper (10), according to claim 2 wherein the fluid circuit is arranged to feed fluid to the rams (40, 42) simultaneously so as to enable the application of high pressure to one end of the one ram and to the opposite end of the other ram.

4. A dumper (10), according to claim 2 or 3 wherein the fluid circuit is arranged to drain fluid from both rams (40, 42) simultaneously so as to enable the drainage of low pressure fluid from one end of one ram and the opposite end of the other ram.

5. A dumper (10), according to claim 3 and 4 wherein the rams (40, 42) each comprise one end and an opposite end and the fluid circuit comprises a first means for communicating fluid to the one end of a first ram and the opposite end of a second ram, and a second means for communicating fluid to the one end of the second ram and the opposite end of the first ram.

6. A dumper (10), according to claim 5 wherein the valve means (58) comprises a first pressure release means for allowing communication of fluid from the first to the second fluid communication means (56, 60) in order to relieve fluid pressure above a predetermined level.

7. A dumper (10) according to claim 5 or 6 wherein the valve means (58) comprises a second pressure release means for allowing communication of fluid from the second to the first fluid communication means (56, 60) in order to relieve fluid pressure above a predetermined level.

8. A dumper (10) according to claim 6 or 7 wherein fluid communication through each of the pressure release means in the opposite direction to the pressure release direction is inhibited respectively by said first or second pressure release means.

9. A method of halting the slewing of a dumper (10) according to any of claims 2 to 8 comprising the steps of:
applying an increase in fluid pressure to selected opposite ends of the rams (40, 42) so as to prevent fluid release therefrom and to counter the direction of movement of the skip (26);
allowing release of excess fluid pressure above a predetermined level in the fluid circuit; and
allowing fluid communication from a first fluid communication means (56) connecting opposite ends of the two rams (40, 42) along a first release means to a second fluid communication means (60), or allowing fluid communication from the second fluid communication means (60) connecting different opposite ends of the two rams along a second release means to the first fluid communication means (56).

## Patentansprüche

1. Fluidschaltung für eine Kippvorrichtung, welche zwei fluidbetriebene Druckkolben (40, 42), eine Fluidverbindungsleitung (56, 60) zu jedem Druckkolben und eine Ventileinrichtung (58) umfaßt, welche ermöglicht, daß unter Druck stehendes Fluid in einem Teil der Fluidschaltung mit dem anderen Teil der Fluidschaltung entweichen kann, wenn das Fluid in einer Verbindungsleitung (56, 60), welche zu einem der Druckkolben (40, 42) führt, einen vorgegebenen Druck aufgrund der Tatsache überschreitet, daß der Druckkolben (40, 42) einem plötzlichen Belastungsanstieg ausgesetzt ist, **dadurch gekennzeichnet**, daß die Ventileinrichtung (58) erste und zweite Druckentlastungseinrichtungen zwischen den Fluidverbindungsleitungen (56, 60) zu dem jeweiligen Druckkolben (40, 42) aufweist, die erste Druckentlastungseinrichtung eine kommunizierende Verbindung für das Fluid von einer ersten zu einer zweiten Fluidverbindungsleitung (56, 60) gestattet, daß die zweite Druckentlastungseinrichtung eine kommunizierende Verbindung für das Fluid von der zweiten zu der ersten Fluidverbindungsleitung (60, 56) gestattet, und daß eine kommunizierende Fluidverbindung in Gegenrichtung durch die jeweilige Druckentlastungseinrichtung unterbunden ist.

2. Kippfahrzeug (10), welches ein Chassis (12, 14) aufweist, auf welchem ein eine Last aufnehmender Kippbehälter (26) und zwei fluidbetriebene Druckkolben (40, 42) zur Ausführung einer Drehbewegung des Kippbehälters (26) um eine Achse angebracht sind, wobei die Druckkolben (40, 42) in einer Fluidschaltung (56, 60) angeordnet sind, welche unter Druck stehendes Fluid zu den Druckkolben (40, 42) liefert, wobei die Fluidschaltung eine Fluidverbindungseinrichtung (56, 60) zu dem jeweiligen Druckkolben (40, 42) und eine Ventileinrichtung (58) umfaßt, welche gestattet, daß das unter Druck stehende Fluid in einem Teil der Fluidschaltung zu dem anderen Teil der Fluidschaltung dann entweichen kann, wenn das Fluid in einer Verbindungseinrichtung (56, 60), welche zu einem der Druckkolben (40, 42) führt, einen vorgegebenen Druck aufgrund der Tatsache überschreitet, daß der Druckkolben (40, 42) einer plötzlichen Belastungszunahme ausgesetzt ist, **dadurch gekennzeichnet**, daß die Druckkolben (40, 42) schwenkbeweglich zwischen dem Chassis (12, 14) und dem Kippbehälter (26) in ihrer Verbindung angeordnet sind, und daß die Ventileinrichtung (58) eine Druckentlastungseinrichtung aufweist, welche zwischen der Fluidverbindungseinrichtung (56, 60) und dem jeweiligen Druckkolben (40, 42) vorgesehen ist.

3. Kippfahrzeug (10) nach Anspruch 2, **dadurch gekennzeichnet**, daß die Fluidschaltung derart ausgelegt ist, daß dem Kolben (40, 42) gleichzeitig Fluid zugeführt wird, so daß ein hoher Druck an einem Ende des Druckkolbens und an dem gegenüberliegenden Ende des anderen Druckkolbens aufgebracht werden kann.

4. Kippfahrzeug (10) nach Anspruch 2 oder 3, bei dem die Fluidschaltung derart ausgelegt ist, daß Fluid von beiden Druckkolben (40, 42) gleichzeitig abgeleitet werden kann, so daß die Ableitung von unter niedrigem Druck stehendem Fluid von einem Ende eines Druckkolbens und dem gegenüberliegenden Ende des anderen Druckkolbens ermöglicht werden kann.

5. Kippfahrzeug (10) nach Anspruch 3 und 4, bei dem die Druckkolben (40, 42) jeweils ein Ende und ein gegenüberliegendes Ende aufweisen, und die Fluidschaltung eine erste Einrichtung zur kommunizierender Verbindung für das Fluid mit einem Ende des ersten Druckkolbens und dem gegenüberliegenden Ende eines zweiten Druckkolbens und eine zweite Einrichtung zur Herstellung einer kommunizierenden Verbindung für das Fluid an dem einen Ende des zweiten Druckkolbens und dem gegenüberliegenden Ende des ersten Druckkolbens aufweist.

6. Kippfahrzeug (10) nach Anspruch 5, bei dem die Ventileinrichtung (58) eine erste Druckentlastungseinrichtung aufweist, welche ermöglicht, daß eine kommunizierende Verbindung des Fluids von der ersten und der zweiten Fluidverbindungseinrichtung (56, 60) hergestellt wird, um einen Fluiddruck über einen vorbestimmten Wert zu entlasten.

7. Kippfahrzeug (10) nach Anspruch 5 oder 6, bei dem die Ventileinrichtung (58) eine zweite Druckentlastungseinrichtung aufweist, welche eine kommunizierende Verbindung für das Fluid von der zweiten zu der ersten Fluidverbindungseinrichtung (56, 60) herstellt, um einen Fluiddruck über einem vorbestimmten Wert zu entlasten.

8. Kippfahrzeug (10) nach Anspruch 6 oder 7, bei dem die Fluidverbindung durch die jeweiligen Druckentlastungseinrichtungen in Gegenrichtung zu der Druckentlastungseinrichtung jeweils durch die ersten oder zweiten Druckentlastungseinrichtungen verhindert wird.

9. Verfahren zum Anhalten der Bewegung eine Kippeinrichtung (10) um eine Achse gemäß einer der Ansprüche 2 bis 8, welches die folgenden Schritte aufweist:
Anlegen eines größer werdenden Fluiddruckes an entsprechende gegenüberliegende Enden der Druckkolben (40, 42) derart, daß eine Fluidabführung hiervon verhindert wird und eine Gegenwirkung zu der Bewegungsrichtung des Kippbehälters (26) aufgebaut wird;
Entlasten des zu großen Fluiddruckes oberhalb eines bestimmten Wertes in der Fluidschaltung; und
Herstellen einer kommunizierenden Verbindung von der ersten Fluidverbindungseinrichtung (56), welche die gegenüberliegenden Enden der beiden Druckkolben (40, 42) entlang einer ersten Entlastungseinrichtung verbindet, mit einer zweiten Fluidverbindungseinrichtung (60) oder Herstellen einer kommunizierenden Fluidverbindung von der zweiten Fluidverbindungseinrichtung (60), welche die unterschiedlichen gegenüberliegenden Enden der beiden Druckkolben entlang einer zweiten Entlastungseinrichtung verbindet, mit der ersten Fluidverbindungseinrichtung (56).

## Revendications

1. Circuit hydraulique pour un véhicule à benne, le circuit comprenant deux vérins pouvant être actionnés par fluide (40, 42), une conduite de communication de fluide (56, 60) vers chaque vérin et des moyens de soupape (58) destinés à permettre à du fluide sous pression dans une partie dudit circuit hydraulique de s'échapper vers une autre partie du circuit dans le cas où du fluide dans une conduite de communication (56, 60) conduisant vers l'un des vérins (40, 42) dépasse une pression donnée du fait que ce vérin (40, 42) est soumis à une augmentation soudaine de charge, caractérisé en ce que les moyens de soupape (58) comportent des premier et deuxième moyens de libération de pression prévus entre les conduites de communication de fluide (56, 60) vers chaque vérin (40, 42), lesdits premiers moyens de libération de pression permettant une communication de fluide depuis une première vers une deuxième desdites conduites de communication de fluide (56, 60), lesdits deuxièmes moyens de libération de pression permettant une communication de fluide depuis la deuxième vers la première conduite de communication de fluide (60, 56), et une communication de fluide dans la direction opposée à travers chacun des moyens de libération de pression est empêchée.

2. Véhicule à benne (10) comportant un châssis (12, 14) sur lequel est montée une benne de transport de charge (26) et deux vérins pouvant être actionnés par fluide (40, 42) afin de basculer la benne (26), les vérins (40, 42) étant prévus dans un circuit hydraulique (56, 60) qui délivre du fluide sous pression aux vérins (40, 42), le circuit hydraulique comprenant des moyens de communication de fluide (56, 60) vers chaque vérin (40, 42), et des moyens de soupape (58) destinés à permettre à du fluide sous pression dans une partie dudit circuit hydraulique de s'échapper vers une autre partie du circuit dans le cas où du fluide dans les moyens de communication de fluide (56, 60) conduisant à l'un des vérins (40, 42) dépasse une pression donnée du fait que ce vérin (40, 42) est soumis à une augmentation soudaine de charge, caractérisé en ce que les vérins (40, 42) sont reliés de façon pivotante entre le châssis (12, 14) et la benne (26), et les moyens de soupape (58) comportent des moyens de libération de pression prévus entre les moyens de communication de fluide (56, 60) vers chaque vérin (40, 42).

3. Véhicule à benne (10) selon la revendication 2, dans lequel le circuit hydraulique est prévu pour délivrer simultanément du fluide aux vérins (40, 42) de façon à permettre l'application d'une pression élevée sur une extrémité d'un vérin et sur l'extrémité opposée de l'autre vérin.

4. Véhicule à benne (10) selon la revendication 2 ou 3, dans lequel le circuit hydraulique est prévu pour évacuer simultanément du fluide des deux vérins (40, 42) de façon à permettre l'évacuation de fluide à basse pression depuis une extrémité d'un vérin et une extrémité opposée de l'autre vérin.

5. Véhicule à benne (10) selon la revendication 3 et 4, dans lequel les vérins (40, 42) comportent chacun une première extrémité et une extrémité opposée et le circuit hydraulique comporte des premiers moyens destinés à faire communiquer du fluide vers la première extrémité d'un premier vérin et l'extrémité opposée d'un deuxième vérin, et des deuxièmes moyens destinés à faire communiquer du fluide vers la première extrémité du deuxième vérin et l'extrémité opposée du premier vérin.

6. Véhicule à benne (10) selon la revendication 5, dans lequel les moyens de soupape (58) comportent des premiers moyens de libération de pression destinés à permettre une communication de fluide depuis les premiers vers les deuxièmes, moyens de communication de fluide (56, 60) afin de libérer une pression de fluide au-dessus d'un niveau prédeterminé.

7. Véhicule à benne (10) selon la revendication 5 ou 6, dans, lequel les moyens de soupape (58) comportent des deuxièmes moyens de libération de pression destinées à permettre une communication de fluide depuis les deuxièmes vers les premiers moyens de communication de fluide (56, 60) afin de libérer une pression de fluide au-dessus d'un niveau prédéterminé.

8. Véhicule à benne (10) selon la revendication 6 ou 7, dans lequel une communication de fluide à travers chacun des moyens de libération de pression dans la direction opposée à la direction de libération de pression est empêchée de manière respective par lesdits premiers ou deuxièmes moyens de libération de pression.

9. Procédé d'arrêt du basculement d'un véhicule à benne (10) selon l'une quelconque des revendications 2 à 8, comportant les étapes consistant à :
appliquer une augmentation de pression de fluide sur des extrémités opposées sélectionnées des vérins (40, 42) de façon à empêcher une libération de fluide de ceux-ci et à contrer la direction de déplacement de la benne (26),
permettre la libération de pression de fluide en excès au-dessus d'un niveau prédéterminé dans le circuit hydraulique; et
permettre une communication de fluide depuis des premiers moyens de communication de fluide (56) reliant des extrémités opposées des deux vérins (40, 42) le long de premiers moyens de libération jusqu'à des deuxièmes moyens de communication de fluide (60), ou bien permettre une communication de fluide depuis les deuxièmes moyens de communication de fluide (60) reliant des extrémités opposées différentes des deux vérins le long de deuxièmes moyens de libération jusqu'aux premiers moyens de communication de fluide (56).
